# EUROPEAN PATENT APPLICATION

(11) **EP 4 686 642 A1**
(43) Date of publication of application: **04.02.2026**
(21) Application number: 24220748.8
(22) Date of filing: 17.12.2024
(51) Int. Cl.: B62D 25/08

(54) **SUPPORT BEAM ASSEMBLY FOR VEHICLE AND VEHICLE**

(30) Priority: 29.07.2024 CN 202411026362
(71) Applicant: Zhejiang Leapmotor Technology Co., Ltd, Hangzhou, Zhejiang 310051 (CN)
(72) Inventor: DING, Weiguang, ZHEJIANG, 310051 (CN); ZHANG, Shuaiwu, ZHEJIANG, 310051 (CN); LUO, Jichang, ZHEJIANG, 310051 (CN); CHEN, Zhijia, ZHEJIANG, 310051 (CN)
(74) Representative: Wörz, Volker Alfred

(57) **Abstract**

The present application provides a support beam assembly (10) for a vehicle and the vehicle (20). The support beam assembly (10) includes a cabin longitudinal beam assembly (100), a reinforcement plate assembly (200), and a dash board assembly (300). The cabin longitudinal beam assembly (100) defines an accommodating chamber (101), and a first end (1001) of the cabin longitudinal beam assembly (100) is configured to be connected to a front anti-collision beam of the vehicle. One end (2001) of the reinforcement plate assembly (200) is disposed in the accommodating chamber (101), and the other end (2002) of the reinforcement plate assembly (200) extends to a sill beam (500) of the vehicle and is configured to be connected to the sill beam (500). A middle of the reinforcement plate assembly (200) is connected to the cabin longitudinal beam assembly (100).

## Description

### TECHNICAL FIELD

The present disclosure relates to the field of vehicle technologies, and in particular to a support beam assembly for a vehicle and the vehicle.

### BACKGROUND

In order to enhance competitiveness of a vehicle, various automotive companies are focusing on improving performance of the vehicle in different aspects, such as crashworthiness of the vehicle. The vehicle in related art has a problem of insufficient smoothness in transition of a force to a sill beam of the vehicle, resulting in inability to improve the crashworthiness of the vehicle. There is an urgent need for the vehicle that can improve the crashworthiness.

### SUMMARY OF THE DISCLOSURE

The present disclosure provides a support beam assembly for a vehicle and the vehicle, which can improve crashworthiness of the vehicle.

In order to solve the above technical problem, a technical solution adopted in the present disclosure is to provide a support beam assembly for a vehicle. The support beam assembly includes a cabin longitudinal beam assembly, a reinforcement plate assembly, and a dash board assembly. The cabin longitudinal beam assembly defines an accommodating chamber, and a first end of the cabin longitudinal beam assembly is configured to be connected to a front anti-collision beam of the vehicle. One end of the reinforcement plate assembly is disposed in the accommodating chamber, the other end of the reinforcement plate assembly extends to a sill beam of the vehicle and is configured to be connected to the sill beam, and a middle of the reinforcement plate assembly is connected to the cabin longitudinal beam assembly. The dash board assembly includes a transverse beam reinforcement plate and a dash board lower transverse beam disposed along a longitudinal direction of the vehicle. The transverse beam reinforcement plate is disposed on a side of the second end of the cabin longitudinal beam assembly away from the reinforcement plate assembly, and an end of the transverse beam reinforcement plate extends to the sill beam and is connected to the sill beam; and the dash board lower transverse beam is connected to the second end of the cabin longitudinal beam assembly, the other end of the reinforcement plate assembly, and the sill beam, respectively.

In some embodiments, the support beam assembly further includes an installation bracket. The installation bracket is connected to the second end of the cabin longitudinal beam assembly and the other end of the transverse beam reinforcement plate, respectively; and the installation bracket is configured for allowing a subframe of the vehicle to be installed on the installation bracket.

In some embodiments, the cabin longitudinal beam assembly includes a longitudinal beam inner plate and a longitudinal beam support plate. The longitudinal beam inner plate defines the accommodating chamber, and one end of the longitudinal beam inner plate is connected to the front anti-collision beam. One end of the longitudinal beam support plate is connected to the other end of the longitudinal beam inner plate, and the other end of the longitudinal beam support plate extends to the dash board lower transverse beam and is connected to the transverse beam reinforcement plate, the installation bracket, and the dash board lower transverse beam, respectively.

In some embodiments, the reinforcement plate assembly includes a first reinforcement plate and a second reinforcement plate. The first reinforcement plate is disposed in the accommodating chamber and connected to an inner wall of the longitudinal beam inner plate. A front end of the second reinforcement plate is connected to a rear end of the first reinforcement plate and an inner wall of the longitudinal beam support plate, respectively; and a rear end of the second reinforcement plate extends to the sill beam and is connected to the sill beam and the transverse beam reinforcement plate.

In some embodiments, the second reinforcement plate includes a first side wall and a second side wall. Two ends of the first side wall are connected to the first reinforcement plate, the sill beam, and the dash board lower transverse beam, respectively; and a middle section of the first side wall is connected to the longitudinal beam support plate and the installation bracket, respectively. The second side wall is connected to the first side wall, and two ends of the second side wall are connected to the first reinforcement plate and the sill beam, respectively. The second side wall is connected to a side of the first side wall away from the transverse beam reinforcement plate, and an opening defined by the second side wall and the first side wall faces away from interior of a passenger compartment of the vehicle, so that a side of the first side wall and a side of the second side wall, which are close to the interior of the passenger compartment, form an installation surface. The installation surface is configured for allowing a front wall lower plate of the dash board assembly to be installed on the installation surface.

In some embodiments, the other end of the reinforcement plate assembly and the second end of the cabin longitudinal beam assembly are disposed along a lateral direction of the vehicle, the transverse beam reinforcement plate and the second end of the cabin longitudinal beam assembly are disposed along a vertical direction of the vehicle, and the transverse beam reinforcement plate extends along the lateral direction.

In some embodiments, the dash board assembly further includes an integrated front wall lower plate, and the front wall lower plate and the dash board lower transverse beam are disposed along a vertical direction of the vehicle, and a rear part of the front wall lower plate is flush with a top part of the dash board lower transverse beam.

In some embodiments, the cabin longitudinal beam assembly further includes a longitudinal beam outer plate. The longitudinal beam outer plate, the longitudinal beam inner plate, and the longitudinal beam support plate are disposed along a lateral direction of the vehicle. The longitudinal beam outer plate is connected to the longitudinal beam inner plate, the reinforcement plate assembly, and the sill beam, respectively.

In some embodiments, a projection of the second side wall along a vertical direction of the vehicle is disposed on the transverse beam reinforcement plate.

In some embodiments, the cabin longitudinal beam assembly is able to transmit a collision force to the sill beam through the reinforcement plate assembly, and the cabin longitudinal beam assembly is also able to transmit the collision force to the sill beam through the transverse beam reinforcement plate and the dash board lower transverse beam.

In some embodiments, the dash board assembly further includes a dash board middle transverse beam, and each of two opposite sides of the dash board middle transverse beam along a length extending direction of the dash board middle transverse beam is provided with one transverse beam reinforcement plate.

In some embodiments, each of two opposite sides of the vehicle along a lateral direction is provided with one cabin longitudinal beam assembly and one reinforcement plate assembly.

In some embodiments, two cabin longitudinal beam assemblies are spaced apart from each other, one cabin longitudinal beam assembly is disposed on one side of two opposite sides of the dash board assembly, the other cabin longitudinal beam assembly is disposed on the other side of the two opposite sides of the dash board assembly, and the two opposite sides of the dash board assembly are disposed along a lateral direction of the vehicle.

In some embodiments, two reinforcement plate assemblies are spaced apart from each other, one reinforcement plate assembly is disposed on one side of two opposite sides of the dash board assembly, the other reinforcement plate assembly is disposed on the other side of the two opposite sides of the dash board assembly, and the two opposite sides of the dash board assembly are disposed along a lateral direction of the vehicle.

In order to solve the above technical problem, another technical solution adopted in the present disclosure is to provide a vehicle. The vehicle includes a support beam assembly of any one of above embodiments.

Different from the related art, effects of the present disclosure are as follows. The support beam assembly of the present application includes a cabin longitudinal beam assembly, a reinforcement plate assembly, and a dash board assembly. The cabin longitudinal beam assembly defines an accommodating chamber, and a first end of the cabin longitudinal beam assembly is configured to be connected to a front anti-collision beam of the vehicle. One end of the reinforcement plate assembly is disposed in the accommodating chamber, and the other end of the reinforcement plate assembly extends to a sill beam of the vehicle and is configured to be connected to the sill beam. A middle of the reinforcement plate assembly is connected to the cabin longitudinal beam assembly. The dash board assembly includes a transverse beam reinforcement plate and a dash board lower transverse beam disposed along a longitudinal direction of the vehicle. The transverse beam reinforcement plate is disposed on a side of a second end of the cabin longitudinal beam assembly away from the reinforcement plate assembly, and an end of the transverse beam reinforcement plate extends to the sill beam and is connected to the sill beam. The dash board lower transverse beam is connected to the second end of the cabin longitudinal beam assembly, the other end of the reinforcement plate assembly, and the sill beam, respectively. The support beam assembly in the present application can improve crashworthiness of the vehicle. Therefore, the cabin longitudinal beam assembly of the present disclosure is connected to the front anti-collision beam of the vehicle. When the front anti-collision beam or the cabin longitudinal beam assembly experience a collision, the collision force is transmitted through the cabin longitudinal beam assembly from the front of the vehicle to the rear of the vehicle. The cabin longitudinal beam assembly transmits the collision force to the sill beam through the reinforcement plate assembly. Furthermore, the cabin longitudinal beam assembly transmits the collision force to the sill beam through the transverse beam reinforcement plate and the dash board lower transverse beam, thereby improving smoothness of transition of the collision force to the sill beam and enhancing crashworthiness of the vehicle. In addition, the transverse beam reinforcement plate can further reduce transmission efficiency of the collision force along the lateral direction of the vehicle, further improving the crashworthiness of the vehicle.

### BRIEF DESCRIPTION OF THE DRAWINGS

In order to more clearly describe technical solutions in some embodiments of the present disclosure, hereinafter, accompanying drawings that are used in description of some embodiments will be briefly described. Obviously, the accompanying drawings in the description below merely show some embodiments of the present disclosure. For those of ordinary skill in the art, other accompanying drawings may be obtained based on these accompanying drawings without any creative efforts.
FIG. 1 is a structural schematic view of a support beam assembly for a vehicle in some embodiments of the present disclosure.
FIG. 2 is a structural schematic view illustrating an arrangement of a cabin longitudinal beam assembly, a reinforcement plate assembly, and a transverse beam reinforcement plate in some embodiments of the present disclosure.
FIG. 3 is a structural schematic view illustrating an arrangement of the cabin longitudinal beam assembly and the transverse beam reinforcement plate in some embodiments of the present disclosure.
FIG. 4 is a structural schematic view of the cabin longitudinal beam assembly in some embodiments of the present disclosure.
FIG. 5 is another structural schematic view of the cabin longitudinal beam assembly in some embodiments of the present disclosure.
FIG. 6 is a structural schematic view of a front wall lower plate in some embodiments of the present disclosure.
FIG. 7 is a structural schematic view of a vehicle in some embodiments of the present disclosure.

### DETAILED DESCRIPTION

The technical solutions in some embodiments of the present disclosure may be clearly and completely described in conjunction with the accompanying drawings in some embodiments of the present disclosure. Obviously, the described embodiments are only a part of the embodiments of the present disclosure, and not all embodiments. Based on the embodiments in the present disclosure, all other embodiments obtained by those of ordinary skill in the art without creative effort are within the scope of the present disclosure.

It should be noted that when directional indications (such as up, down, left, right, front, rear, or the like) are involved in some embodiments of the present disclosure, the directional indications are only configured to explain a relative position relationship between components in a specific posture (as shown in the accompanying drawings), a motion situation between the components in the specific posture (as shown in the accompanying drawings), or the like. When the specific posture is changed, the directional indication is also changed accordingly.

In addition, when there are descriptions related to "first", "second", or the like in the embodiments of the present disclosure, the terms "first", "second", or the like are only configured to describe and cannot be understood as indicating or implying relative importance or implicit indicating the quantity of technical features indicated. Therefore, features limited to "first" and "second" may explicitly or implicitly include at least one of these features. In addition, the technical solutions between various embodiments can be combined with each other, but the combination must be able to be implemented by those of ordinary skill in the art. When the combination of the technical solutions is contradictory or cannot be implemented, it should be considered that this combination of the technical solutions does not exist and is not within protection scope required by the present disclosure.

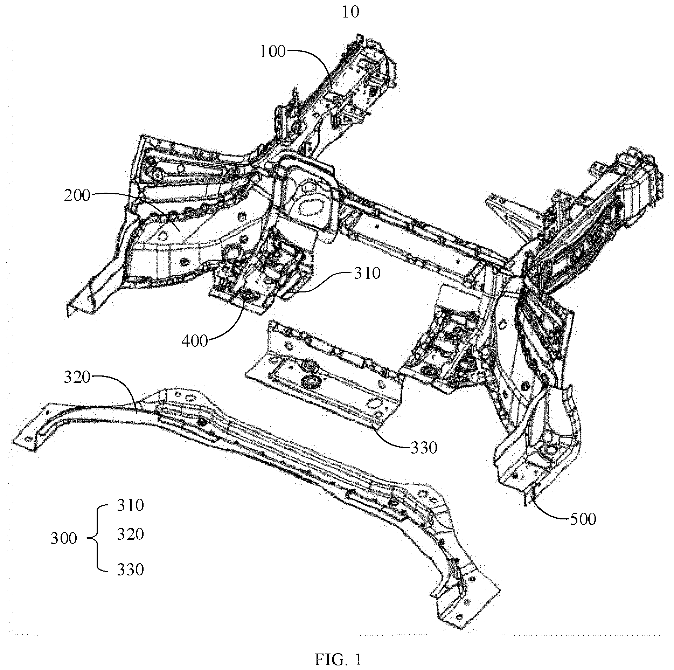

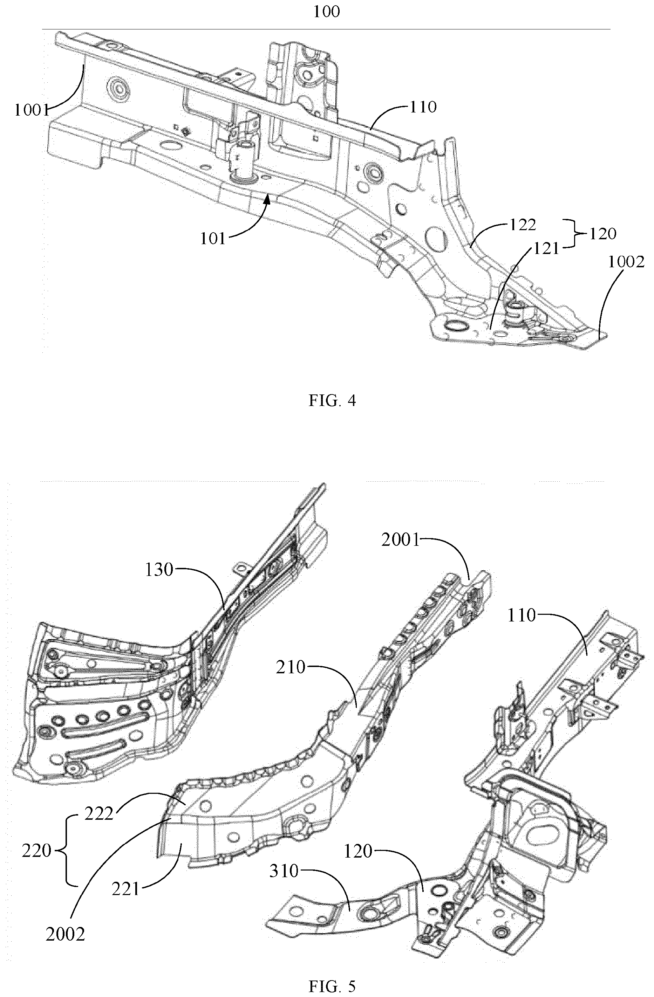

As illustrated in FIG. 1, FIG. 1 is a structural schematic view of a support beam assembly 10 for a vehicle in some embodiments of the present disclosure. The support beam assembly 10 includes two cabin longitudinal beam assemblies 100, two reinforcement plate assemblies 200, and a dash board assembly 300. Each cabin longitudinal beam assembly 100 defines an accommodating chamber 101 (as illustrated in FIG. 4), and a first end 1001 of each cabin longitudinal beam assembly 100 is configured to be connected to a corresponding front anti-collision beam of the vehicle. One end 2001 of each reinforcement plate assembly 200 is disposed in the accommodating chamber 101 of the corresponding cabin longitudinal beam assembly 100, and the other end 2002 of each reinforcement plate assembly 200 extends to a corresponding sill beam 500 of the vehicle and is configured to be connected to the corresponding sill beam 500. A middle of each reinforcement plate assembly 200 is further connected to the corresponding cabin longitudinal beam assembly 100. The dash board assembly 300 includes two transverse beam reinforcement plates 310 and a dash board lower transverse beam 320, and each transverse beam reinforcement plate 310 extends along a longitudinal direction of the vehicle. Each transverse beam reinforcement plate 310 is disposed on a side of a second end 1002 of the corresponding cabin longitudinal beam assembly 100 away from the corresponding reinforcement plate assembly 200. An end 3101 of each transverse beam reinforcement plate 310 extends to the corresponding sill beam 500 and is connected to the corresponding sill beam 500. The dash board lower transverse beam 320 is connected to the second end 1002 of each cabin longitudinal beam assembly 100, the other end 2002 of each reinforcement plate assembly 200, and each sill beam 500, respectively.

In some embodiments, the dash board assembly 300 is disposed close to a front of the vehicle, between front doors and front wheels, and extends along a lateral direction of the vehicle. The dash board assembly 300 further includes a dash board middle transverse beam 330, each of two opposite sides of the dash board middle transverse beam 330 along a length extending direction is provided with one transverse beam reinforcement plate 310. The transverse beam reinforcement plates 310 can transmit a collision force along the lateral direction. In addition, each of two opposite sides of the vehicle along the lateral direction is provided with one cabin longitudinal beam assembly 100 and one reinforcement plate assembly 200. Two cabin longitudinal beam assemblies 100 are spaced apart from each other, one cabin longitudinal beam assembly 100 is disposed on one side of two opposite sides of the dash board assembly 300, the other cabin longitudinal beam assembly 100 is disposed on the other side of the two opposite sides of the dash board assembly 300, and the two opposite sides of the dash board assembly 300 are disposed along the lateral direction of the vehicle. Two reinforcement plate assemblies 200 are spaced apart from each other, one reinforcement plate assembly 200 is disposed on one side of two opposite sides of the dash board assembly 300, the other reinforcement plate assembly 200 is disposed on the other side of the two opposite sides of the dash board assembly 300, and the two opposite sides of the dash board assembly 300 are disposed along the lateral direction of the vehicle. The reinforcement plate assemblies 200 can enhance stiffness of the cabin longitudinal beam assemblies 100.

In the present disclosure, the cabin longitudinal beam assemblies 100 are connected to the front anti-collision beams of the vehicle. When the front anti-collision beams or the cabin longitudinal beam assemblies 100 experience a collision, the collision force is transmitted through the cabin longitudinal beam assemblies 100 from the front of the vehicle to the rear of the vehicle. Each cabin longitudinal beam assembly 100 transmits the collision force to the corresponding sill beam 500 through the corresponding reinforcement plate assembly 200. Furthermore, each cabin longitudinal beam assembly 100 transmits the collision force to the corresponding sill beam 500 through the corresponding transverse beam reinforcement plate 310 and the dash board lower transverse beam 320, thereby improving smoothness of transition of the collision force to the sill beams 500 and enhancing crashworthiness of the vehicle. In addition, the transverse beam reinforcement plates 310 can further reduce transmission efficiency of the collision force along the lateral direction of the vehicle, further improving the crashworthiness of the vehicle.

In some embodiments, a connection with the sill beam 500 in the present disclosure may be achieved through a connector or the like.

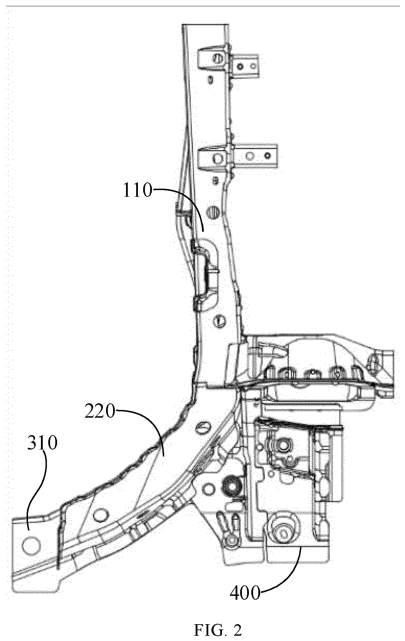

As illustrated in FIG. 2, FIG. 2 is a structural schematic view illustrating an arrangement of a cabin longitudinal beam assembly 100, a reinforcement plate assembly 200, and a transverse beam reinforcement plate 310 in some embodiments of the present disclosure. The other end 2002 of the reinforcement plate assembly 200 and the second end 1002 of the cabin longitudinal beam assembly 100 are arranged along the lateral direction of the vehicle, and the transverse beam reinforcement plate 310 and the second end 1002 of the cabin longitudinal beam assembly 100 are arranged along a vertical direction of the vehicle. The transverse beam reinforcement plate 310 extends along the lateral direction. Each cabin longitudinal beam assembly 100 serves as a first force transmission mechanism of the vehicle, each reinforcement plate assembly 200 serves as a second force transmission mechanism of the vehicle, and each transverse beam reinforcement plate 310 serves as a third force transmission mechanism of the vehicle. The first force transmission mechanism, the second force transmission mechanism, and the third force transmission mechanism form a trident structure, which can enhance connection stability among the first force transmission mechanism, the second force transmission mechanism, and the third force transmission mechanism. In addition, the first force transmission mechanism, the second force transmission mechanism, and the third force transmission mechanism can transmit a main collision force to the sill beams 500, improving the smoothness of the transition of the collision force to the sill beams 500 and enhancing the crashworthiness of the vehicle. Furthermore, the third force transmission mechanism can further reduce the transmission efficiency of the collision force along the lateral direction of the vehicle, further improving the crashworthiness of the vehicle.

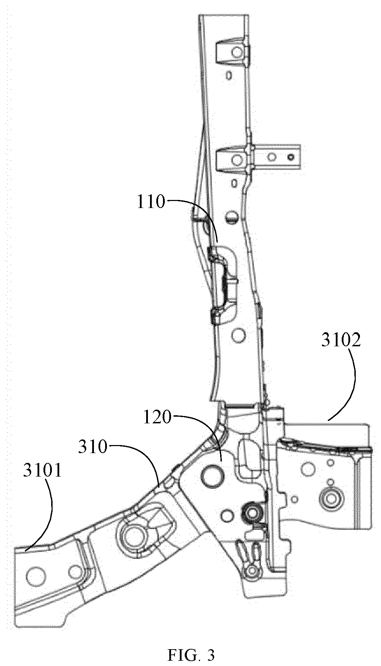

As illustrated in FIG. 3, FIG. 3 is a structural schematic view illustrating an arrangement of the cabin longitudinal beam assembly 100 and the transverse beam reinforcement plate 310 in some embodiments of the present disclosure. Each transverse beam reinforcement plate 310 is designed in a herringbone pattern. A left part of the herringbone pattern, that is one end 3101 of the transverse beam reinforcement plate 310, extends to the corresponding sill beam 500. A right part of the herringbone pattern, that is another end 3102 of the transverse beam reinforcement plate 310, forms a part of the dash board middle transverse beam 330. Each transverse beam reinforcement plate 310 is disposed on the side of the second end 1002 of the corresponding cabin longitudinal beam assembly 100 away from the corresponding reinforcement plate assembly 200. Each transverse beam reinforcement plate 310 intersects with the corresponding cabin longitudinal beam assembly 100 in a cross pattern.

In some embodiments, in order to further improve the crashworthiness of the vehicle, the support beam assembly 10 further includes two installation brackets 400, and each installation bracket 400 is configured for allowing a vehicle subframe to be installed on the installation bracket 400. Each installation bracket 400 is connected to a rear end of the corresponding cabin longitudinal beam assembly 100 and the another end 3102 of the corresponding transverse beam reinforcement plate 310. Each installation bracket 400 and the corresponding transverse beam reinforcement plate 310 can serve as the third force transmission mechanism of the vehicle. The collision force can be transmitted to the subframe along the third force transmission mechanism, and the transmission efficiency of the collision force along the lateral direction of the vehicle can be reduced, which can improve the crashworthiness of the vehicle.

In some embodiments, the installation bracket 400 is disposed on an upper part of the another end 3102 of transverse beam reinforcement plate 310 with the herringbone pattern. The installation bracket 400 is a box shaped part. Periphery of the installation bracket 400 is spot welded to the second end 1002 of the corresponding cabin longitudinal beam assembly 100, a bottom surface and a side surface of the another end 3102 of the corresponding transverse beam reinforcement plate 310. Each transverse beam reinforcement plate 310 and the corresponding installation bracket 400 form the third force transmission mechanism for frontal force transmission.

As illustrated in FIG. 4, FIG. 4 is a structural schematic view of the cabin longitudinal beam assembly 100 in some embodiments of the present disclosure. Each cabin longitudinal beam assembly 100 includes a longitudinal beam inner plate 110 and a longitudinal beam support plate 120. The longitudinal beam inner plate 110 defines the accommodating chamber 101. One end (that is the first end 1001 of the cabin longitudinal beam assembly 100) of the longitudinal beam inner plate 110 is connected to the corresponding front anti-collision beam, and one end of the longitudinal beam support plate 120 is connected to the other end of the longitudinal beam inner plate 110. The other end (that is the second end 1002 of the cabin longitudinal beam assembly 100) of the longitudinal beam support plate 120 extends to the dash board lower transverse beam 320, and is connected to the corresponding transverse beam reinforcement plate 310, the corresponding installation bracket 400, and the dash board lower transverse beam 320, respectively. The longitudinal beam support plate 120 and the longitudinal beam inner plate 110 are connected end-to-end. A rear section (that is a section of the longitudinal beam support plate 120 away from the longitudinal beam inner plate 110) of the longitudinal beam support plate 120 gradually decreases along the vertical direction of the vehicle and extends to the dash board lower transverse beam 320. The rear section of the longitudinal beam support plate 120 is connected to the corresponding transverse beam reinforcement plate 310, the corresponding installation bracket 400, and the dash board lower transverse beam 320, respectively.

In some embodiments, each cabin longitudinal beam assembly 100 is segmented, and incudes the longitudinal beam support plate 120 and the longitudinal beam inner plate 110, which can facilitate installation and manufacturing of the longitudinal beam support plate 120 and longitudinal beam inner plate 110.

In some embodiments, the longitudinal beam inner plate 110 has a U-shaped structure as a whole, and defines a U-shaped accommodating chamber 101. The longitudinal beam inner plate 110 with a U-shaped structure can be easily processed.

In some embodiments, the rear section of the longitudinal beam support plate 120 is provided with a first installation part 121 and a second installation part 122. A side of the rear section of the longitudinal beam support plate 120 close to the installation bracket 400 extends along a direction away from the transverse beam reinforcement plate 310, to form the second installation part 122. The first installation part 121 and the second installation part 122 are configured to be connected to the dash board lower transverse beam 320. In some embodiments, the rear section of the longitudinal beam support plate 120 is provided with the first installation part 121 and the second installation part 122, which can improve the connection stability between the longitudinal beam support plate 120 and the dash board lower transverse beam 320.

As illustrated in FIG. 5, FIG. 5 is another structural schematic view of the cabin longitudinal beam assembly 100 in some embodiments of the present disclosure. The cabin longitudinal beam assembly 100 further includes two longitudinal beam outer plates 130. Each longitudinal beam outer plate 130, the corresponding longitudinal beam inner plate 110 and the corresponding longitudinal beam support plate 120 are arranged along the lateral direction of the vehicle. Each longitudinal beam outer plate 130 is connected to a side of the corresponding longitudinal beam inner plate 110 away from interior of a passenger compartment of the vehicle, the other end 2002 of the corresponding reinforcement plate assembly 200, and the corresponding sill beam 500, respectively.

As illustrated in FIG. 5, each reinforcement plate assembly 200 includes a first reinforcement plate 210 and a second reinforcement plate 220. The first reinforcement plate 210 is disposed in the accommodating chamber 101 and connected to an inner wall of the longitudinal beam inner plate 110. A front end of the second reinforcement plate 220 is connected to a rear end of the corresponding first reinforcement plate 210 and an inner wall of the corresponding longitudinal beam support plate 120, respectively. A rear end (that is the other end 2002 of the reinforcement plate assembly 200) of the second reinforcement plate 220 extends to the corresponding sill beam 500 and is connected to the corresponding sill beam 500 and the corresponding transverse beam reinforcement plate 310. The second reinforcement plate 220 and the first reinforcement plate 210 are connected end-to-end, and the second reinforcement plate 220 is connected to the inner wall of the corresponding longitudinal beam support plate 120 and the corresponding longitudinal beam outer plate 130. The rear end of the second reinforcement plate 220 gradually decreases along the vertical direction of the vehicle, extends to the corresponding sill beam 500, and is connected to the corresponding sill beam 500 and the corresponding transverse beam reinforcement plate 310. In some embodiments, each reinforcement plate assembly 200 is segmented, and includes the first reinforcement plate 210 and the second reinforcement plate 220, which can enhance the stiffness of the correspondingly longitudinal beam inner plate 110 and the correspondingly longitudinal beam support plate 120. It facilitates the installation of the first reinforcement plate 210, the second reinforcement plate 220, the longitudinal beam inner plate 110, and the longitudinal beam support plate 120. It also facilitates manufacturing of the first reinforcement plate 210 and the second reinforcement plate 220.

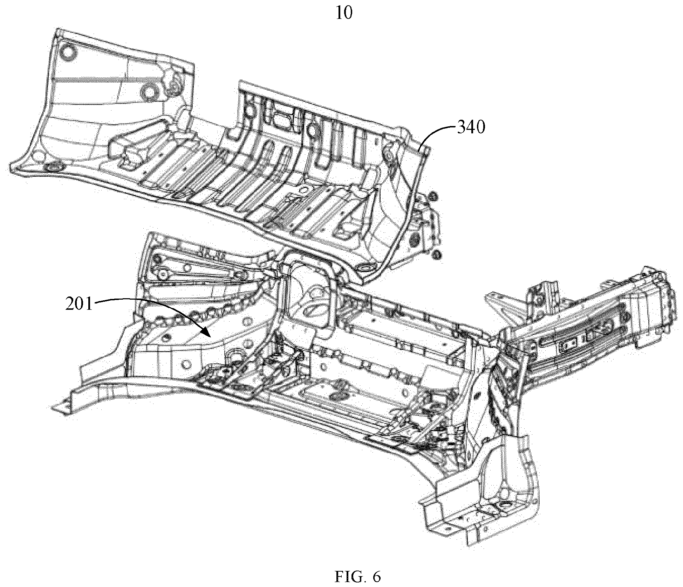

In some embodiments, the second reinforcement plate 220 includes a first side wall 221 and a second side wall 222. Two ends of the first side wall 221 are connected to the corresponding first reinforcement plate 210, the corresponding sill beam 500, and the dash board lower transverse beam 320, respectively. A middle section of the first side wall 221 is further connected to the corresponding longitudinal beam support plate 120 and the corresponding installation bracket 400. Two ends of the second side wall 222 are connected to the corresponding first reinforcement plate 210 and the corresponding sill beam 500, respectively. The second side wall 222 is connected to a side of the first side wall 221 away from the corresponding transverse beam reinforcement plate 310, and an opening formed or defined by the second side wall 222 and the first side wall 221 faces away from the interior of the passenger compartment, so that a side of the first side wall 221 and a side of the second side wall 222, which are close to the interior of the passenger compartment, form an installation surface 201 (as illustrated in FIG. 6). The installation surface 201 is configured for allowing a front wall lower plate 340 to be installed on the installation surface 201. In some embodiments, the second reinforcement plate 220 includes the first side wall 221 and the second side wall 222, and the second side wall 222 is connected to the side of the first side wall 221 away from the transverse beam reinforcement plate 310. The opening formed or defined by the second side wall 222 and the first side wall 221 faces away from the interior of the passenger compartment, so that the side of the first side wall 221 and the side of the second side wall 222, which are close to the interior of the passenger compartment, form the installation surface 201. The installation surface 201 can facilitate the installation of the front wall lower plate 340.

In some embodiments, a projection of the second side wall 222 along the vertical direction of the vehicle is disposed on the transverse beam reinforcement plate 310, so that a layout of the transverse beam reinforcement plate 310 and the second reinforcement plate 220 is reasonable, improving compactness of the transverse beam reinforcement plate 310 and the second reinforcement plate 220, thereby increasing space utilization.

As illustrated in FIG. 6, FIG. 6 is a structural schematic view of a front wall lower plate 340 in some embodiments of the present disclosure. The dash board assembly 300 further includes an integrated front wall lower plate 340. The front wall lower plate 340 is disposed on a side of the dash board lower transverse beam 320 close to the interior of the passenger compartment, and a rear part (a part of the front wall lower plate 340 away from the interior of the passenger compartment) of the front wall lower plate 340 is flush with the side of the dash board lower transverse beam 320 close to the interior of the passenger compartment. The rear part of front wall lower plate 340 is flush with a rear flange of the dash board lower transverse beam 320. The front wall lower plate 340 is made of a hot pressed high-strength plate material, which also plays a role in transmitting force.

In some embodiments, the integrated front wall lower plate 340 is disposed, most of front energy is transmitted to the sill beams 500 by the front wall lower plate 340, the dash board lower transverse beam 320, and the three force transmission mechanisms. Furthermore, the front energy is blocked by the dash board lower transverse beam 320, and the dash board lower transverse beam 320 and the front wall lower plate 340 form a transverse partition structure, reducing deformation of a rear floor and optimizing a compression force on an upper part of a battery. Therefore, the overall crashworthiness of the vehicle is excellent. In addition, the side of the front wall lower plate 340 close to the dash board lower transverse beam 320 is flush with a rear cutting edge of the dash board lower transverse beam 320, and the rear cutting edge is a front floor. The dash board lower transverse beam 320, left and right sill beams 500, and a rear floor frame form a frame structure that can expand an integrated structure of a battery body, increase internal use space of a battery box, and improve good sealing performance.

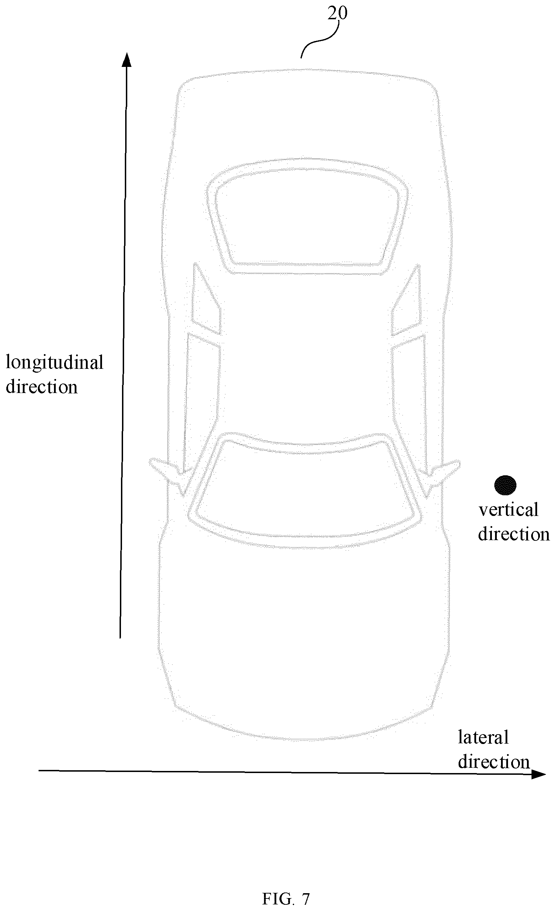

The present disclosure further provides a vehicle, as illustrated in FIG. 7, FIG. 7 is a structural schematic view of a vehicle 20 in some embodiments of the present disclosure. As illustrated in FIG. 7, the vehicle 20 includes the support beam assembly 10. The support beam assembly 10 is any one of the support beam assemblies 10 in the above embodiments, which is not repeated here. The effects that can be achieved by the support assembly can also be achieved in the vehicle.

In the description of the present disclosure, reference terms, such as "an embodiment", "some embodiments", "examples", "specific examples", "some examples" or the like, mean that specific features, mechanisms, materials, or features described in conjunction with the embodiments or examples may be included in at least one embodiment or example of the present disclosure. In the present specification, illustrative expressions of the above reference terms do not necessarily refer to the same embodiments or examples. Moreover, the specific features, the mechanisms, the materials, or the characteristics described may be combined in an appropriate manner in any one or more embodiments or examples. In addition, without mutual contradiction, those of skilled in the art may combine different embodiments or examples, and combine the features of the different embodiments or examples described in the present specification.

The above descriptions are only some embodiments of the present disclosure, and are not intended to limit the protection scope of the present disclosure. Any equivalent structure or equivalent flow transformation made by using the contents and the accompanying drawings of the present disclosure, or directly or indirectly applied to other related technical fields, is included in the protection scope of the present disclosure.

## Claims

1. A support beam assembly (10) for a vehicle, **characterized by** comprising:
a cabin longitudinal beam assembly (100), defining an accommodating chamber (101), wherein a first end (1001) of the cabin longitudinal beam assembly (100) is configured to be connected to a front anti-collision beam of the vehicle;
a reinforcement plate assembly (200), wherein one end (2001) of the reinforcement plate assembly (200) is disposed in the accommodating chamber (101), the other end (2002) of the reinforcement plate assembly (200) extends to a sill beam (500) of the vehicle and is configured to be connected to the sill beam (500), and a middle of the reinforcement plate assembly (200) is connected to the cabin longitudinal beam assembly (100); and
a dash board assembly (300), comprising a transverse beam reinforcement plate (310) and a dash board lower transverse beam (320) disposed along a longitudinal direction of the vehicle, wherein the transverse beam reinforcement plate (310) is disposed on a side of a second end (1002) of the cabin longitudinal beam assembly (100) away from the reinforcement plate assembly (200), and an end (3101) of the transverse beam reinforcement plate (310) extends to the sill beam (500) and is connected to the sill beam (500); and the dash board lower transverse beam (320) is connected to the second end (1002) of the cabin longitudinal beam assembly (100), the other end (2002) of the reinforcement plate assembly (200), and the sill beam (500), respectively.

2. The support beam assembly (10) according to claim 1, wherein the support beam assembly (10) further comprises:
an installation bracket (400), connected to the second end (1002) of the cabin longitudinal beam assembly (100) and the other end (3102) of the transverse beam reinforcement plate (310), respectively; wherein the installation bracket (400) is configured for allowing a subframe of the vehicle to be installed on the installation bracket (400).

3. The support beam assembly (10) according to claim 2, wherein the cabin longitudinal beam assembly (100) comprises:
a longitudinal beam inner plate (110), defining the accommodating chamber (101), wherein one end of the longitudinal beam inner plate (110) is connected to the front anti-collision beam; and
a longitudinal beam support plate (120), wherein one end of the longitudinal beam support plate (120) is connected to the other end of the longitudinal beam inner plate (110), and the other end of the longitudinal beam support plate (120) extends to the dash board lower transverse beam (320) and is connected to the transverse beam reinforcement plate (310), the installation bracket (400), and the dash board lower transverse beam (320), respectively.

4. The support beam assembly (10) according to claim 3, wherein the reinforcement plate assembly (200) comprises:
a first reinforcement plate (210), disposed in the accommodating chamber (101) and connected to an inner wall of the longitudinal beam inner plate (110); and
a second reinforcement plate (220), wherein a front end of the second reinforcement plate (220) is connected to a rear end of the first reinforcement plate (210) and an inner wall of the longitudinal beam support plate (120), respectively; and a rear end of the second reinforcement plate (220) extends to the sill beam (500) and is connected to the sill beam (500) and the transverse beam reinforcement plate (310).

5. The support beam assembly (10) according to claim 4, wherein the second reinforcement plate (220) comprises:
a first side wall (221), wherein two ends of the first side wall (221) are connected to the first reinforcement plate (210), the sill beam (500), and the dash board lower transverse beam (320), respectively; and a middle section of the first side wall (221) is connected to the longitudinal beam support plate (120) and the installation bracket (400), respectively; and
a second side wall (222), connected to the first side wall (221), wherein two ends of the second side wall (222) are connected to the first reinforcement plate (210) and the sill beam (500), respectively;
wherein the second side wall (222) is connected to a side of the first side wall (221) away from the transverse beam reinforcement plate (310), and an opening defined by the second side wall (222) and the first side wall (221) faces away from interior of a passenger compartment of the vehicle, so that a side of the first side wall (221) and a side of the second side wall (222), which are close to the interior of the passenger compartment, form an installation surface (201); and the installation surface (201) is configured for allowing a front wall lower plate (340) of the dash board assembly (300) to be installed on the installation surface (201).

6. The support beam assembly (10) according to claim 1, wherein the other end (2002) of the reinforcement plate assembly (200) and the second end (1002) of the cabin longitudinal beam assembly (100) are disposed along a lateral direction of the vehicle, the transverse beam reinforcement plate (310) and the second end (1002) of the cabin longitudinal beam assembly (100) are disposed along a vertical direction of the vehicle, and the transverse beam reinforcement plate (310) extends along the lateral direction.

7. The support beam assembly (10) according to claim 2, wherein the dash board assembly (300) further comprises an integrated front wall lower plate (340), and the front wall lower plate (340) and the dash board lower transverse beam (320) are disposed along a vertical direction of the vehicle, and a rear part of the front wall lower plate (340) is flush with a top part of the dash board lower transverse beam (320).

8. The support beam assembly (10) according to claim 3, wherein the cabin longitudinal beam assembly (100) further comprises:
a longitudinal beam outer plate (130), wherein the longitudinal beam outer plate (130), the longitudinal beam inner plate (110), and the longitudinal beam support plate (120) are disposed along a lateral direction of the vehicle; and the longitudinal beam outer plate (130) is connected to the longitudinal beam inner plate (110), the reinforcement plate assembly (200), and the sill beam (500), respectively.

9. The support beam assembly (10) according to claim 5, wherein a projection of the second side wall (222) along a vertical direction of the vehicle is disposed on the transverse beam reinforcement plate (310).

10. The support beam assembly (10) according to claim 1, wherein the cabin longitudinal beam assembly (100) is able to transmit a collision force to the sill beam (500) through the reinforcement plate assembly (200), and the cabin longitudinal beam assembly (100) is also able to transmit the collision force to the sill beam (500) through the transverse beam reinforcement plate (310) and the dash board lower transverse beam (320).

11. The support beam assembly (10) according to claim 1, wherein the dash board assembly (300) further includes a dash board middle transverse beam, and each of two opposite sides of the dash board middle transverse beam along a length extending direction of the dash board middle transverse beam is provided with one transverse beam reinforcement plate (310).

12. The support beam assembly (10) according to claim 1, wherein each of two opposite sides of the vehicle along a lateral direction is provided with one cabin longitudinal beam assembly (100) and one reinforcement plate assembly (200).

13. The support beam assembly (10) according to claim 12, wherein two cabin longitudinal beam assemblies are spaced apart from each other, one cabin longitudinal beam assembly (100) is disposed on one side of two opposite sides of the dash board assembly (300), the other cabin longitudinal beam assembly (100) is disposed on the other side of the two opposite sides of the dash board assembly (300), and the two opposite sides of the dash board assembly (300) are disposed along a lateral direction of the vehicle.

14. The support beam assembly (10) according to claim 12, wherein two reinforcement plate assemblies are spaced apart from each other, one reinforcement plate assembly (200) is disposed on one side of two opposite sides of the dash board assembly (300), the other reinforcement plate assembly (200) is disposed on the other side of the two opposite sides of the dash board assembly (300), and the two opposite sides of the dash board assembly (300) are disposed along a lateral direction of the vehicle.

15. A vehicle (20), **characterized by** comprising:
a support beam assembly (10) according to any one of claims 1 to 14.

## Amended claims

### Amended claims in accordance with Rule 137(2) EPC.

1. A support beam assembly (10) for a vehicle, comprising:
a cabin longitudinal beam assembly (100), defining an accommodating chamber (101), wherein a first end (1001) of the cabin longitudinal beam assembly (100) is configured to be connected to a front anti-collision beam of the vehicle;
**characterized in that** the support beam assembly (10) further comprises:
a reinforcement plate assembly (200), wherein one end (2001) of the reinforcement plate assembly (200) is disposed in the accommodating chamber (101), the other end (2002) of the reinforcement plate assembly (200) extends to a sill beam (500) of the vehicle and is configured to be connected to the sill beam (500), and a middle of the reinforcement plate assembly (200) is connected to the cabin longitudinal beam assembly (100); and
a dash board assembly (300), comprising a transverse beam reinforcement plate (310) and a dash board lower transverse beam (320) disposed along a longitudinal direction of the vehicle, wherein the transverse beam reinforcement plate (310) is disposed on a side of a second end (1002) of the cabin longitudinal beam assembly (100) away from the reinforcement plate assembly (200), and an end (3101) of the transverse beam reinforcement plate (310) extends to the sill beam (500) and is connected to the sill beam (500); and the dash board lower transverse beam (320) is connected to the second end (1002) of the cabin longitudinal beam assembly (100), the other end (2002) of the reinforcement plate assembly (200), and the sill beam (500), respectively.

2. The support beam assembly (10) according to claim 1, wherein the support beam assembly (10) further comprises:
an installation bracket (400), connected to the second end (1002) of the cabin longitudinal beam assembly (100) and the other end (3102) of the transverse beam reinforcement plate (310), respectively; wherein the installation bracket (400) is configured for allowing a subframe of the vehicle to be installed on the installation bracket (400).

3. The support beam assembly (10) according to claim 2, wherein the cabin longitudinal beam assembly (100) comprises:
a longitudinal beam inner plate (110), defining the accommodating chamber (101), wherein one end of the longitudinal beam inner plate (110) is connected to the front anti-collision beam; and
a longitudinal beam support plate (120), wherein one end of the longitudinal beam support plate (120) is connected to the other end of the longitudinal beam inner plate (110), and the other end of the longitudinal beam support plate (120) extends to the dash board lower transverse beam (320) and is connected to the transverse beam reinforcement plate (310), the installation bracket (400), and the dash board lower transverse beam (320), respectively.

4. The support beam assembly (10) according to claim 3, wherein the reinforcement plate assembly (200) comprises:
a first reinforcement plate (210), disposed in the accommodating chamber (101) and connected to an inner wall of the longitudinal beam inner plate (110); and
a second reinforcement plate (220), wherein a front end of the second reinforcement plate (220) is connected to a rear end of the first reinforcement plate (210) and an inner wall of the longitudinal beam support plate (120), respectively; and a rear end of the second reinforcement plate (220) extends to the sill beam (500) and is connected to the sill beam (500) and the transverse beam reinforcement plate (310).

5. The support beam assembly (10) according to claim 4, wherein the second reinforcement plate (220) comprises:
a first side wall (221), wherein two ends of the first side wall (221) are connected to the first reinforcement plate (210), the sill beam (500), and the dash board lower transverse beam (320), respectively; and a middle section of the first side wall (221) is connected to the longitudinal beam support plate (120) and the installation bracket (400), respectively; and
a second side wall (222), connected to the first side wall (221), wherein two ends of the second side wall (222) are connected to the first reinforcement plate (210) and the sill beam (500), respectively;
wherein the second side wall (222) is connected to a side of the first side wall (221) away from the transverse beam reinforcement plate (310), and an opening defined by the second side wall (222) and the first side wall (221) faces away from interior of a passenger compartment of the vehicle, so that a side of the first side wall (221) and a side of the second side wall (222), which are close to the interior of the passenger compartment, form an installation surface (201); and the installation surface (201) is configured for allowing a front wall lower plate (340) of the dash board assembly (300) to be installed on the installation surface (201).

6. The support beam assembly (10) according to claim 1, wherein the other end (2002) of the reinforcement plate assembly (200) and the second end (1002) of the cabin longitudinal beam assembly (100) are disposed along a lateral direction of the vehicle, the transverse beam reinforcement plate (310) and the second end (1002) of the cabin longitudinal beam assembly (100) are disposed along a vertical direction of the vehicle, and the transverse beam reinforcement plate (310) extends along the lateral direction.

7. The support beam assembly (10) according to claim 2, wherein the dash board assembly (300) further comprises an integrated front wall lower plate (340), and the front wall lower plate (340) and the dash board lower transverse beam (320) are disposed along a vertical direction of the vehicle, and a rear part of the front wall lower plate (340) is flush with a top part of the dash board lower transverse beam (320).

8. The support beam assembly (10) according to claim 3, wherein the cabin longitudinal beam assembly (100) further comprises:
a longitudinal beam outer plate (130), wherein the longitudinal beam outer plate (130), the longitudinal beam inner plate (110), and the longitudinal beam support plate (120) are disposed along a lateral direction of the vehicle; and the longitudinal beam outer plate (130) is connected to the longitudinal beam inner plate (110), the reinforcement plate assembly (200), and the sill beam (500), respectively.

9. The support beam assembly (10) according to claim 5, wherein a projection of the second side wall (222) along a vertical direction of the vehicle is disposed on the transverse beam reinforcement plate (310).

10. The support beam assembly (10) according to claim 1, wherein the cabin longitudinal beam assembly (100) is able to transmit a collision force to the sill beam (500) through the reinforcement plate assembly (200), and the cabin longitudinal beam assembly (100) is also able to transmit the collision force to the sill beam (500) through the transverse beam reinforcement plate (310) and the dash board lower transverse beam (320).

11. The support beam assembly (10) according to claim 1, wherein the dash board assembly (300) further includes a dash board middle transverse beam, and each of two opposite sides of the dash board middle transverse beam along a length extending direction of the dash board middle transverse beam is provided with one transverse beam reinforcement plate (310).

12. The support beam assembly (10) according to claim 1, wherein each of two opposite sides of the vehicle along a lateral direction is provided with one cabin longitudinal beam assembly (100) and one reinforcement plate assembly (200).

13. The support beam assembly (10) according to claim 12, wherein two cabin longitudinal beam assemblies are spaced apart from each other, one cabin longitudinal beam assembly (100) is disposed on one side of two opposite sides of the dash board assembly (300), the other cabin longitudinal beam assembly (100) is disposed on the other side of the two opposite sides of the dash board assembly (300), and the two opposite sides of the dash board assembly (300) are disposed along a lateral direction of the vehicle.

14. The support beam assembly (10) according to claim 12, wherein two reinforcement plate assemblies are spaced apart from each other, one reinforcement plate assembly (200) is disposed on one side of two opposite sides of the dash board assembly (300), the other reinforcement plate assembly (200) is disposed on the other side of the two opposite sides of the dash board assembly (300), and the two opposite sides of the dash board assembly (300) are disposed along a lateral direction of the vehicle.

15. A vehicle (20), **characterized by** comprising:
a support beam assembly (10) according to any one of claims 1 to 14.
